# EUROPÄISCHE PATENTSCHRIFT

(11) **EP 3 564 127 B1**
(45) Veröffentlichungstag und Bekanntmachung des Hinweises auf die Patenterteilung: **14.10.2020**
(21) Anmeldenummer: 19167497.7
(22) Anmeldetag: 05.04.2019
(51) Int. Cl.: B64D 13/06

(54) **FLUGZEUGKÜHLSYSTEM UND FLUGZEUG MIT FLUGZEUGKÜHLSYSTEM**
AIRCRAFT COOLING SYSTEM AND AIRCRAFT HAVING A VEHICLE COOLING SYSTEM
SYSTÈME DE REFROIDISSEMENT D'AVION ET AVION POURVU DE SYSTÈME DE REFROIDISSEMENT D'AVION

(30) Priorität: 20.04.2018 DE 102018109480
(43) Veröffentlichungstag der Anmeldung: 06.11.2019
(73) Patentinhaber: Airbus Operations GmbH, 21129 Hamburg (DE)
(72) Erfinder: Klimpel, Frank, 21129 Hamburg (DE)

(56) Entgegenhaltungen:
- DE-A1-102015 207 447
- DE-C1- 19 963 280
- US-A- 3 878 692
- US-A1- 2015 121 909

## Beschreibung

Die Erfindung betrifft ein Flugzeugskühlsystem mit einer Kälteerzeugungseinrichtung, wobei durch einen Wasserabscheider gewonnenes Wasser durch einen Wasserauslass abgeführt wird, an dem eine weitere wasserführende Leitung mit Unterdruck beaufschlagt angeschlossen ist, und betrifft ferner ein Flugzeug mit einem derartigen Flugzeugkühlsystem.

In Verkehrsflugzeugen werden derzeit zur Klimatisierung der Flugzeugkabine üblicherweise sogenannte luftgestützte Klimaanlagen eingesetzt, wie sie beispielsweise in der DE 10 2008 053 320 B4 bzw. der US 8,333,078 B2 beschrieben sind. Eine Flugzeugklimaanlage dient der Einstellung und Aufrechterhaltung eines gewünschten Drucks, einer gewünschten Temperatur und einer gewünschten Luftfeuchtigkeit in einer Flugzeugkabine. Darüber hinaus führt die Flugzeugklimaanlage ausreichend Frischluft in die Flugzeugkabine zu, um sicherzustellen, dass in der Flugzeugkabine ein vorgeschriebener Mindestanteil von Frischluft vorhanden ist.

Ein weiteres relevantes Beispiel des Standes der Technik ist durch DE 199 63 280 C1 gegeben.

Luftgestützte Flugzeugklimaanlagen umfassen in der Regel ein Klimaaggregat (oder auch Air Conditioning Pack oder nur Air Pack genannt), dem von den Triebwerken des Flugzeugs, einem separaten Verdichter oder einem Hilfstriebwerk (APU, Auxiliary Power Unit) verdichtete Prozessluft zugeführt wird. Im Flugbetrieb des Flugzeugs wird vorwiegend Triebswerkszapfluft zur Versorgung des Klimaaggregats der Flugzeugklimaanlage mit verdichteter Prozessluft genutzt. Im Bodenbetrieb des Flugzeugs wird dem Klimaaggregat der Flugzeugklimaanlage dagegen üblicherweise von dem Hilfstriebwerk oder einem flugzeugexternen Lufterzeugungsaggregat verdichtete Prozessluft zugeführt. In dem Klimaaggregat wird die Prozessluft beim Durchströmen mindestens einer Wärmetauschereinheit sowie diverser Verdichtungs- und Expansionseinheiten abgekühlt und entspannt. Aus dem Klimaaggregat austretende gekühlte Prozessluft wird schließlich in eine Mischkammer geleitet und dort mit aus einem zu klimatisierenden Flugzeugbereich abgeführter Rezirkulationsluft gemischt. Die Mischluft aus der Mischkammer wird über entsprechende Mischluftleitungen in den zu klimatisierenden Flugzeugbereich geleitet, der in Form einer Passagierkabine, eines Cockpits, eines Frachtraums, eines Crew-Ruheraums oder dergleichen ausgestaltet sein kann.

In der Wärmetauschereinheit des Klimaaggregates zur Kühlung der Prozessluft findet ein Wärmeenergietransfer der heißen Prozessluft auf Flugzeugumgebungsluft statt. Die Flugzeugumgebungsluft wird der Wärmetauschereinheit beispielsweise durch einen Stauluftkanal zugeführt und nimmt beim Durchströmen der Wärmetauschereinheit die Wärmeenergie auf. Insbesondere bei relativ warmer Umgebungsluft (beispielsweise auf einem Flughafenrollfeld bei Sonneneinstrahlung) ist der Wärmeenergietransfer auf die Umgebungsluft schlechter, sodass die Verdichtungs- und Expansionseinheiten des Klimaaggregates mehr Energie verbrauchen.

Der Erfindung liegt die Aufgabe zugrunde, ein Flugzeugkühlsystem bereitzustellen, das eine energieeffiziente und treibstoffsparende Klimatisierung einer Flugzeugkabine ermöglicht. Ferner liegt der Erfindung die Aufgabe zugrunde, ein Flugzeug mit solch einem Flugzeugkühlsystem bereitzustellen.

Diese Aufgabe wird durch ein Flugzeugkühlsystem mit den Merkmalen des Anspruchs 1 und durch ein Flugzeug mit den Merkmalen des Anspruchs 12 gelöst.

Die vorliegende Erfindung betrifft ein Flugzeugkühlsystem mit einem Stauluftkanal, einer in dem Stauluftkanal angeordneten Düse, die an eine erste wasserführende Leitung angeschlossen ist, und einer Kälteerzeugungseinrichtung. Die Kälteerzeugungseinrichtung umfasst ihrerseits einen thermisch mit der Kälteerzeugungseinrichtung gekoppelten Wärmetauscher, der dazu eingerichtet ist, von der Kälteerzeugungseinrichtung erzeugte Abwärme an in dem Stauluftkanal vorhandene Kühlluft abzugeben, einen ersten Wasserabscheider, der dazu eingerichtet ist, Wasser aus der von der Kälteerzeugungseinrichtung gekühlten Luft abzuscheiden, und einen Wasserauslass, der dazu eingerichtet ist, in dem ersten Wasserabscheider gewonnenes Wasser in die erste wasserführende Leitung einzuleiten.

Die in dem Stauluftkanal angeordnete Düse kann also mit dem in der Kälteerzeugungseinrichtung gewonnenen (abgeschiedenen) Wasser versorgt werden, wobei die Düse das Wasser in die im Stauluftkanal vorhandene Kühlluft verteilt. Bei der Düse kann es sich insbesondere um eine Sprühdüse handeln, die das Wasser aus der ersten wasserführenden Leitung in Form kleiner Tröpfchen in die Kühlluft sprüht. Das in die Kühlluft eingesprühte Wasser verdampft, wodurch die Kühlluft aufgrund der Verdampfungsenthalpie des Wassers gekühlt wird.

Ferner kann der Wasserauslass einen Einlass aufweisen, der dazu eingerichtet ist, an eine zweite wasserführende Leitung angeschlossen zu werden. Dabei kann der Wasserauslass ferner dazu eingerichtet sein, einen Unterdruck an dem Einlass zu erzeugen. Somit kann Wasser, das in der zweiten wasserführenden Leitung vorhanden ist, über den Einlass des Wasserauslasses ebenfalls der ersten wasserführenden Leitung und somit der Düse zugeführt werden. Durch die zusätzliche Verdampfungsenthalpie des zusätzlich zugeführten Wassers kann eine bessere (Vor-) Kühlung der Kühlluft erzielt werden.

Beispielsweise kann der Wasserauslass eine Venturi-Düse bilden, wobei der durch die Venturi-Düse gebildete Unterdruck über den Einlass des Wasserauslasses auf die zweite wasserführende Leitung aufgebracht wird. In der Venturi-Düse entsteht der Unterdruck insbesondere durch ein Mitreißen des Fluides (Wassers) aus der zweiten wasserführenden Leitung aufgrund der Strömung des Fluides (Wassers) aus dem Wasserauslass in die erste wasserführende Leitung. Die Bildung einer Venturi-Düse bietet insbesondere im Flugzeug den Vorteil, dass nur wenige zusätzliche Bauteile zur Förderung des Wassers aus der zweiten wasserführenden Leitung benötigt werden, die zudem keine beweglichen Teile haben. Die damit einhergehende Gewichtsersparnis und der reduzierte Wartungsaufwand tragen ebenfalls zu einem energieeffizienten und auch kostenreduzierten Flugzeugkühlsystem bei.

Bei einem als Venturi-Düse ausgebildeten Wasserauslass kann durch den erzeugten Unterdruck ein absoluter Druck am Einlass zwischen 200 und 900 hPa vorliegen. Mit anderen Worten kann der Unterdruck zwischen 100 und 800 hPa betragen, wobei der Einsatz der Venturi-Düse meist nur im Bodenbetrieb des Flugzeugs stattfindet, also bei normalen Umgebungsbedingungen mit ca. 1.000 hPa Umgebungsluftdruck. Selbstverständlich ist der erzeugbare Unterdruck von den Fluiden in den beiden Leitungen abhängig, insbesondere vom Dampfdruck des anzusaugenden und des treibenden Fluides. Beispielsweise kann das vom Wasserauslass kommende Wasser (treibendes Fluid) ca. 4-7 °C und das in der zweiten wasserführenden Leitung vorliegende Wasser (anzusaugendes Fluid) ca. 6-18 °C haben, wodurch der jeweilige Dampfdruck der bestimmende Parameter für den maximal zu erzeugenden Unterdruck ist.

Das Flugzeugkühlsystem kann in einer weiteren Ausgestaltung eine Mischkammer umfassen, die dazu eingerichtet ist, zwei oder mehr Luftströme zu vermischen und einen Mischluftstrom abzugeben. Die Mischkammer kann zusätzlich einen zweiten Wasserabscheider umfassen, der dazu eingerichtet ist, in der Mischkammer anfallendes Kondenswasser abzuscheiden, wobei der zweite Wasserabscheider über die zweite wasserführende Leitung mit dem Einlass des Wasserauslasses der Kälteerzeugungseinrichtung verbunden ist. Die beiden in der Mischkammer vermischten Luftströme haben meist unterschiedliche Temperaturen, wobei der wärmere Luftstrom meist auch eine höhere absolute Luftfeuchtigkeit hat. Bei der Vermischung solcher Luftströme kann das Wasser aus dem wärmeren Luftstrom als Kondenswasser ausfallen.

Durch den in der zweiten wasserführenden Leitung herrschenden Unterdruck, der von dem Wasserauslass der Kälteerzeugungseinrichtung erzeugt wird, wird das in dem zweiten Wasserabscheider anfallende Wasser abgesaugt und über den Wasserauslass der Kälteerzeugungseinrichtung der Düse zugeführt. Somit kann in einfacher Bauweise zusätzliches Wasser zur Kühlung der Umgebungsluft (Kühlluft) bereitgestellt werden. Andernfalls würde anfallendes Kondenswasser ohne weiteren Nutzen in die Umgebung abgeleitet werden. Durch den vorherrschenden Unterdruck in der zweiten wasserführenden Leitung muss in der Mischkammer oder dem zweiten Wasserabscheider keine Fördereinrichtung für das Wasser vorgesehen werden. Daher können sich auch bestehende Systeme leicht und kostengünstig umbauen.

Im Bodenbetrieb des Flugzeugs, und insbesondere während Passagiere an Bord sind, führt die der Mischkammer zugeführte Rezirkulationsluft der Flugzeugkabine einen hohen Wasseranteil, der bei der Vermischung mit der von der Kälteerzeugungseinrichtung gekühlten Frischluft freigesetzt wird. Hierbei kann je nach Ausgestaltung der Kälteerzeugungseinrichtung eine zusätzliche Kühlleistung im Bereich von 3 % bis 15 % der sonst üblichen Kühlleistung erzielt werden.

Gemäß einer weiteren Ausgestaltung kann der erste Wasserabscheider und/oder der Wasserauslass der Kälteerzeugungseinrichtung dazu eingerichtet sein, das in die erste wasserführende Leitung eingeleitete Wasser unter Druck zu setzen. Durch das so unter Druck stehende Wasser, wird dieses durch den Wasserauslass und weiter durch die erste wasserführende Leitung zu der Düse gedrückt. Im Fall eines als Venturi-Düse ausgebildeten Wasserauslasses wird durch die so entstehende Bewegung des Wassers in dem Wasserauslass und der ersten wasserführenden Leitung auch der Unterdruck am Einlass erzeugt. Dadurch lässt sich auf einfache Weise Wasser über den Einlass und die daran angeschlossene zweite wasserführende Leitung dem durch den ersten Wasserabscheider gewonnenen Wasser zufügen.

Ferner kann die Kälteerzeugungseinrichtung dazu eingerichtet sein, den ersten Wasserabscheider mit Druckluft zu beaufschlagen, sodass der Druck auf das in die erste wasserführende Leitung eingeleitete Wasser durch das in dem ersten Wasserabscheider abgeschiedene Wasser aufgebracht wird. Durch den Einsatz von Druckluft in dem Wasserabscheider oder einer Komponente davon wird das in dem Wasserabscheider bzw. seiner Komponente gesammelte Wasser zu dem Wasserauslass gedrückt, wodurch es weiter in die erste wasserführende Leitung gedrückt (gefördert) wird. Der Druck der Druckluft kann zwischen 1.100 und 5.000 hPa oder insbesondere zwischen 2.500 und 4.000 hPa liegen.

Alternativ oder zusätzlich kann der erste Wasserabscheider und/oder der Wasserauslass der Kälteerzeugungseinrichtung eine Fördereinrichtung umfassen, die dazu eingerichtet ist, das in dem ersten Wasserabscheider abgeschiedene Wasser durch die erste wasserführende Leitung zu fördern. Die Fördereinrichtung kann in Form einer Kolbenpumpe, einer Kreiselpumpe oder einer anderen Strömungsmaschine ausgebildet sein. Damit kann das gesammelte Wasser durch die erste wasserführende Leitung auch dann gefördert werden, wenn keine oder nicht genügend Druckluft für den ersten Wasserabscheider zur Verfügung steht.

Das Flugzeugkühlsystem kann in einer weiteren Ausgestaltung ferner eine Quelle komprimierter Luft umfassen, die dazu eingerichtet ist, der Kälteerzeugungseinrichtung komprimierte Luft zuzuführen. Dabei kann die Kälteerzeugungseinrichtung dazu eingerichtet sein, die komprimierte Luft zu entspannen und in dem Wärmetauscher zu kühlen. Selbstverständlich kann die Kälteerzeugungseinrichtung weitere Komponenten, einschließlich weiterer Wärmetauscher, umfassen. Durch das Entspannen der komprimierten Luft wird diese weiter gekühlt, wodurch letztendlich gekühlte Prozessluft in dem Flugzeug durch das Flugzeugkühlsystem zur Verfügung gestellt werden kann.

Die von der Quelle zugeführte komprimierte Luft kann ferner genutzt werden, um den ersten Wasserabscheider mit Druckluft zu beaufschlagen. Beispielsweise kann ein kleiner Teil der komprimierten Luft in oder durch den Wasserabscheider geleitet werden, sodass im Inneren des Wasserabscheiders ein größerer Druck herrscht als in der Umgebungsluft, zu der hin sich die Düse öffnet. Dadurch lässt sich auf einfache Weise und ohne zusätzliche Fördereinrichtung in der Kälteerzeugungseinrichtung anfallendes Wasser in die Umgebungsluft in dem Stauluftkanal drücken.

Ferner kann das Flugzeugkühlsystem einen dritten Wasserabscheider umfassen, der dazu eingerichtet ist, Wasser an einer Einlassöffnung für einen Zuluftstrom, der der Quelle zum Erzeugen der komprimierten Luft zugeführt wird, abzuscheiden. Dabei kann der dritte Wasserabscheider über einen Auslass mit dem Einlass des Wasserauslasses der Kälteerzeugungseinrichtung verbunden sein. Beispielsweise bei Regen oder Sprühwasser in der Umgebungsluft, die von der Quelle angesaugt wird, oder bei (Regen-) Wasser, welches über die Außenhaut des Flugzeugs in eine Einlassöffnung der Quelle fließt, sollte möglichst viel Wasser abgefangen werden, bevor die Umgebungsluft in die Quelle komprimierter Luft strömt. Beispielsweise kann die Quelle komprimierter Luft ein Kompressor oder Hilfstriebwerk speziell zum Komprimieren eines Gases (Luft) sein, welcher/s aufgrund eines zu hohen Wasseranteils in der angesagten Luft beschädigt werden könnte. Dagegen könnte in einem Ansaugkanal der Quelle komprimierter Luft eine Wasserauffangvorrichtung (Wasserabscheider) dienen, beispielsweise in Form einer Mulde, in der sich in dem Zuluftstrom befindliches Wasser und/oder einströmendes Oberflächenwasser sammelt. Der Ansaugkanal befindet sich zwischen der Einlassöffnung und der eigentlichen Quelle komprimierter Luft, also dem Kompressor oder Hilfstriebwerk. Diese Wasserauffangvorrichtung (Mulde) kann den Auslass für aufgefangenes Wasser aufweisen, der mit dem Einlass des Wasserauslasses der Kälteerzeugungseinrichtung verbunden ist, sodass das aufgefangene Wasser abgesaugt wird.

Ferner ist insbesondere bei hoher relativer Luftfeuchtigkeit der Umgebungsluft, aus der die Quelle komprimierter Luft gespeist wird, ein hoher Energieaufwand notwendig, um die komprimierte Luft zu entfeuchten. Mit anderen Worten wird die Kälteerzeugungseinrichtung zusätzlich belastet, um die ihr zugeführte komprimierte Prozessluft auf eine relative Luftfeuchtigkeit für die Zuführung in einem Flugzeugbereich einzustellen. Beispielsweise sollte die relative Luftfeuchtigkeit in einer Passagierkabine des Flugzeugs nicht höher als 60 % betragen. Das in dem dritten Wasserabscheider gesammelte Wasser kann alleine oder zusätzlich zu anderen Wasserquellen über die zweite wasserführende Leitung zu der Düse zur Kühlung der Umgebungsluft verwendet werden. Auch hier kann aufgrund des am Einlass des Wasserauslasses erzeugten Unterdrucks das vom dritten Wasserabscheider gesammelte Wasser leicht abgesaugt und zur Düse gefördert werden. Der bei einer hohen relativen Luftfeuchtigkeit der Umgebungsluft erhöhte Energiebedarf der Kälteerzeugungseinrichtung kann somit zumindest teilweise wieder reduziert werden.

In einer weiteren Ausgestaltung kann der Stauluftkanal einen Lufteinlass und einen Luftauslass umfassen, sodass Umgebungsluft durch den Stauluftkanal von dem Lufteinlass zu dem Luftauslass strömen kann, wobei der Wärmetauscher stromabwärts der Düse angeordnet ist. Dies ermöglicht eine effiziente Ausnutzung der gekühlten Umgebungsluft durch den Wärmetauscher der Kälteerzeugungseinrichtung.

Ferner kann der Stauluftkanal eine Luftfördereinrichtung aufweisen, um Umgebungsluft durch den Stauluftkanal zu leiten. Insbesondere im Bodenbetrieb des Flugzeugs erlaubt die Luftfördereinrichtung den effizienten Betrieb der Kälteerzeugungseinrichtung. Die Luftfördereinrichtung kann in Form eines Gebläses implementiert sein.

In einer weiteren Ausgestaltung kann die Mischkammer ferner einen ersten Einlass, der dazu eingerichtet ist, einen von der Kälteerzeugungseinrichtung erzeugten Frischluftstrom in die Mischkammer einzuleiten, einen zweiten Einlass, der dazu eingerichtet ist, einen von einem Flugzeugabschnitt entnommenen Rezirkulationsluftstrom in die Mischkammer einzuleiten, und einen Auslass, der dazu eingerichtet ist, die in die Mischkammer eingeleiteten und dort vermischten Luftströme dem Flugzeugabschnitt zuzuführen, umfassen.

Des Weiteren kann der Einlass des Wasserauslasses der Kälteerzeugungseinrichtung an jede beliebige wasserführende Leitung angeschlossen werden, über die Wasser aus einem anderen Bereich des Flugzeugs abgeführt werden muss. So kann die hier beschriebene Technik dazu eingesetzt werden, mit einfachen und leichten Mitteln Wasser abzusaugen, und dies an die Umgebung abzugeben. Selbst wenn eine zusätzliche Kühlung nicht notwendig ist, kann so energieeffizient Wasser von Bereichen des Flugzeugs einfach abgeführt werden.

Gemäß einem weiteren Aspekt umfasst ein Flugzeug ein Flugzeugkühlsystem gemäß einer oder mehreren der oben beschriebenen Varianten und Ausgestaltungen.

Die hier beschriebenen Ausgestaltungen, Varianten und Aspekte können beliebig kombiniert werden, sodass weitere nicht explizit beschriebene Ausgestaltungsvarianten umfasst sind.

Nachfolgend werden Ausführungsbeispiele der Erfindung anhand der Zeichnungen näher beschrieben.
- Figur 1: zeigt schematisch ein Flugzeugkühlsystem,
- Figur 2: zeigt schematisch eine detailliertere Ansicht eines Wasserauslasses eines Flugzeugkühlsystems, und
- Figur 3: zeigt schematisch ein Flugzeug mit einem Flugzeugkühlsystem.

Gemäß der vorliegenden Erfindung wird ein Flugzeugkühlsystem mit einem einen Unterdruck erzeugenden Wasserauslass bereitgestellt sowie ein Flugzeug mit solch einem Flugzeugkühlsystem beschrieben.

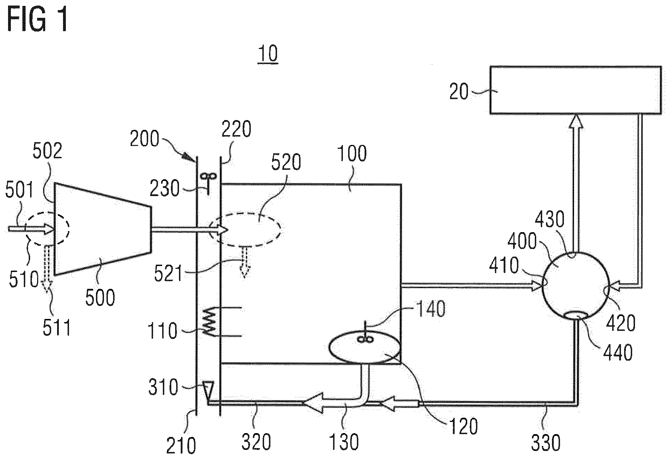

In Figur 1 ist schematisch ein Flugzeugkühlsystem 10 dargestellt. Das Flugzeugkühlsystem umfasst eine Kälteerzeugungseinrichtung 100, die einen thermisch mit der Kälteerzeugungseinrichtung 100 gekoppelten Wärmetauscher 110 aufweist. Der Wärmetauscher 110 ist dazu eingerichtet, von der Kälteerzeugungseinrichtung 100 erzeugte Abwärme an in einem Stauluftkanal 200 vorhandene Kühlluft abzugeben. Hierfür ist der Wärmetauscher 110 in dem Stauluftkanal 200 angeordnet. Beispielsweise ist der in dem Stauluftkanal 200 angeordnete Wärmetauscher 110 über Leitungen mit der Kälteerzeugungseinrichtung 100 verbunden, durch die von der Kälteerzeugungseinrichtung 100 zu kühlende Luft strömt. Der Wärmetauscher 110 stellt daher eine thermische Kopplung zwischen der zu kühlenden Luft und der in dem Stauluftkanal 200 vorhandenen Kühlluft her. Dabei wird die zu kühlende Luft von der Kühlluft durch den Wärmetauscher 110 getrennt. In einer Ausgestaltungsvariante kann der Stauluftkanal 200 auch durch die Kälteerzeugungseinrichtung 100 führen, sodass die Längen der die zu kühlende Luft führenden Leitungen möglichst gering gehalten werden.

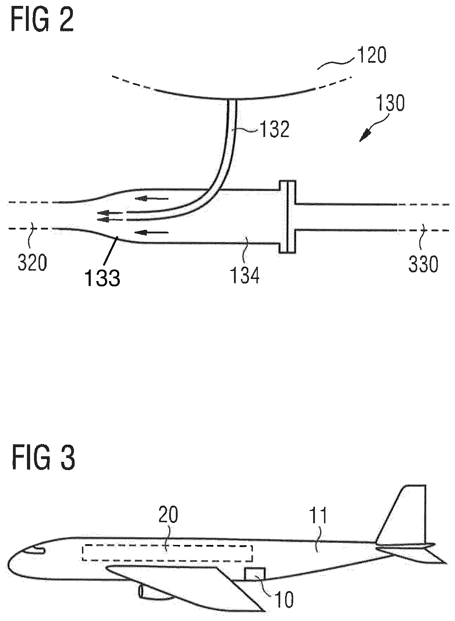

Um in dem Stauluftkanal 200 ausreichend Kühlluft zur Verfügung zu stellen, weist der Stauluftkanal 200 einen Lufteinlass 210 und einen Luftauslass 220 auf. Dadurch kann die Kühlluft durch den Lufteinlass 210 einströmen und durch den Luftauslass 220 ausströmen. Der Lufteinlass 210 und Luftauslass 220 können an einer Außenhaut eines Flugzeugs 11 (Figur 3), in dem das Flugzeugkühlsystem 10 installiert ist, vorgesehen sein und können optional durch entsprechende Klappen (nicht dargestellt) geöffnet und geschlossen werden. Der Lufteinlass kann so konfiguriert sein, dass im Flugbetrieb des Flugzeugs 11 Luft aufgrund des Staudrucks durch den Fahrtwind durch den Stauluftkanal 200 strömt. Ferner kann eine Luftfördereinrichtung 230 in oder an dem Stauluftkanal 200 angeordnet sein, sodass auch bei geringem Staudruck oder im Bodenbetrieb des Flugzeugs eine ausreichende Kühlluftströmung erzielt werden kann.

Die Kälteerzeugungseinrichtung 100 kann ferner einen ersten Wasserabscheider 120 aufweisen, der dazu eingerichtet ist, Wasser aus der von der Kälteerzeugungseinrichtung 100 gekühlten Luft abzuschneiden. Diese Wasserabscheidung kann beispielsweise mittels Kondensation beim Abkühlen der Luft erfolgen, optional auch mit gesondert gekühltem Wasserabscheider 120. Das durch den ersten Wasserabscheider 120 gewonnene Wasser kann einem Wasserauslass 130 der Kälteerzeugungseinrichtung 100 zugeführt werden. Der Wasserauslass 130 ist dazu eingerichtet, das in dem ersten Wasserabscheider 120 gewonnene Wasser in eine erste wasserführende Leitung 320 einzuleiten.

Wie in Figur 2 schematisch dargestellt ist, kann der Wasserauslass 130 einen Einlass 134 aufweisen, der sich von einem Einlass (nicht gezeigt) unterscheidet, über den der erste Wasserabscheider 120 mit dem Wasserauslass 130 verbunden ist. Der hier beschriebene Einlass 134 ist dazu eingerichtet, an eine zweite wasserführende Leitung 330 angeschlossen zu werden. Der Wasserauslass 130 ist ferner dazu eingerichtet, einen Unterdruck an dem Einlass 134 zu erzeugen. Durch den so erzeugten Unterdruck wird ein Fluid, beispielsweise Wasser, aus der zweiten wasserführenden Leitung in den Einlass 134 gesaugt.

Beispielsweise kann der Wasserauslass 130 eine Venturi-Düse bilden wobei der durch die Venturi-Düse gebildete Unterdruck über den Einlass 134 auf die zweite wasserführende Leitung 330 aufgebracht wird. In der schematischen Darstellung der Figur 2 umfasst der Wasserauslass 130 eine Treibdüse 132, die das Wasser von dem ersten Wasserabscheider 120 zu der ersten wasserführenden Leitung 320 leitet. Mittels einer Fangdüse 133, an der der Einlass 134 vorgesehen ist, wird ein Unterdruck durch das aus der Treibdüse 132 austretende Wasser erzeugt. Mit anderen Worten wird durch das aus der Treibdüse 132 austretende Wasser das über die Fangdüse 133 zuströmende Wasser mitgerissen, wodurch in der zweiten wasserführenden Leitung 330 vorhandenes Wasser angesaugt wird, d. h. ein Unterdruck erzeugt wird. Durch diesen Unterdruck wird das Wasser aus der zweiten wasserführenden Leitung 330 angesaugt und in der Fangdüse 133 mit dem aus der Treibdüse 132 austretenden Wasser vermischt und zusammen in die erste wasserführende Leitung 320 gefördert.

Selbstverständlich ist die Anordnung der Treibdüse 132 und Fangdüse 133 nicht auf die in Figur 2 dargestellte Anordnung beschränkt. So kann die von dem Wasserauslass 130 kommende Treibdüse 132 ohne Krümmung auf die erste wasserführende Leitung 320 zulaufen, während die Fangdüse 133 um die Treibdüse 132 herum angeordnet ist und die zweite wasserführende Leitung 330 und/oder der Einlass 134 in einem Winkel zu der Längserstreckung der Treibdüse 132 angeordnet sind.

Das aus dem ersten Wasserabscheider 120 gewonnene Wasser und optional das zusätzliche aus der zweiten wasserführenden Leitung 330 stammende Wasser wird über die erste wasserführende Leitung 320 einer Düse 310 zugeführt. Die Düse 310 ist in dem Stauluftkanal 200 angeordnet. Die Düse 310 ist so eingerichtet, dass sie das über die erste wasserführende Leitung 320 zugeführte Wasser in den Stauluftkanal 200 versprüht, wodurch die Temperatur der in dem Stauluftkanal 200 vorhandenen Kühlluft aufgrund der Verdampfungsenthalpie des Wassers gesenkt wird. Wie in Figur 1 dargestellt ist, ist die Düse 310 stromaufwärts des Wärmetauschers 110 der Kälteerzeugungseinrichtung 100 angeordnet, um die Kühlluft vor dem Wärmeenergietransfer mit dem Wärmetauscher 110 zu kühlen. Die Begriffe "stromaufwärts" und "stromabwärts" betreffen Richtungsangaben entgegen bzw. mit dem jeweiligen Fluidstrom, beispielsweise des Luftstroms in dem Stauluftkanal 200.

Das Flugzeugkühlsystem kann ferner eine Mischkammer 400 umfassen, die dazu eingerichtet ist, zwei oder mehr Luftströme zu vermischen und einen Mischluftstrom abzugeben. Beispielsweise kann ein erster Luftstrom gekühlte Prozessluft von der Kälteerzeugungseinrichtung 100 sein, die über einen ersten Einlass 410 in die Mischkammer 400 einströmt. Über einen zweiten Einlass 420 kann Rezirkulationsluft in die Mischkammer 400 eingeleitet werden. Die Rezirkulationsluft kann aus irgend einem Flugzeugabschnitt 20 stammen, beispielsweise einer Passagierkabine, einem Cockpit, einem Frachtraum, etc. Über einen Auslass 430 können die in der Mischkammer 400 vermischten Luftströme (von denen Einlässen 410 und 420) in den Flugzeugabschnitt 20 und/oder andere Flugzeugabschnitte geleitet werden. Dadurch kann mittels der Mischkammer 400 der Flugzeugabschnitt 20 mit Frischluft mit gewünschter Temperatur und gewünschtem Druck versorgt werden, während die Rezirkulationsluft (zweiter Einlass 420) nur teilweise ausgetauscht wird.

Die Mischkammer 400 kann einen zweiten Wasserabscheider 440 umfassen, der dazu eingerichtet ist, in der Mischkammer 400 anfallendes Kondenswasser abzuscheiden. Der zweite Wasserabscheider 440 kann ferner über die zweite wasserführende Leitung 330 mit dem Einlass 134 des Wasserauslasses 130 der Kälteerzeugungseinrichtung 100 verbunden sein. Durch den am Einlass 134 vorgesehenen Unterdruck kann das Wasser von dem zweiten Wasserabscheider 440 über die zweite wasserführende Leitung 330 abgesaugt werden, ohne dass eine zusätzliche Fördereinrichtung für das Wasser notwendig ist.

Ferner kann das Flugzeugkühlsystem eine Quelle 500 komprimierter Luft umfassen, die dazu eingerichtet ist, der Kälteerzeugungseinrichtung 100 komprimierte oder verdichtete Luft zuzuführen. Die Quelle 500 für komprimierte Luft kann ein Triebwerk, ein Hilfstriebwerk (APU) oder ein separater Verdichter sein. Die Kälteerzeugungseinrichtung 100 verwendet die komprimierte oder verdichtete Luft (bei Triebwerk oder APU als Quelle 500 auch als "Zapfluft" oder "bleed air" bezeichnet) zur Kälteerzeugung, indem die komprimierte Luft entspannt wird und in dem Wärmetauscher 110 gekühlt wird. Selbstverständlich können weitere Wärmetauschereinheiten und mehrere Verdichtungs- und Entspannungszyklen in der Kälteerzeugungseinrichtung 100 vorgesehen sein.

In Figur 1 gestrichelt dargestellt ist ein dritter Wasserabscheider 510, der dazu eingerichtet ist, Wasser an einer Einlassöffnung 502 für einen aus einem Zuluftstrom 501, der der Quelle 500 zum Erzeugen der komprimierten Luft zugeführt wird, abzuscheiden. Der dritte Wasserabscheider 510 ist ferner über einen Auslass 511 mit dem Einlass 134 des Wasserauslasses 130 der Kälteerzeugungseinrichtung 100 verbunden. Somit kann zu den anderen erwähnten Wasserquellen auch die zu komprimierende Luft vor ihrer Zuführung in die Quelle 500 komprimierter Luft entfeuchtet werden. Ebenfalls kann an einer Einlassöffnung der Quelle 500 komprimierter Luft einströmendes Wasser (beispielsweise durch Regen oder Sprühwasser) aufgefangen und gesammelt werden. Dadurch kann die Quelle 500 komprimierter Luft geschützt werden, da es sich meist um einen Kompressor oder ähnlichen Verdichter handelt, der auf die Komprimierung von einem gasförmigen Fluid ausgelegt ist und eine einströmende Flüssigkeit diesen schädigen würde.

In einer weiteren Ausgestaltung, in Figur 1 ebenfalls gestrichelt dargestellt, kann ein vierter Wasserabscheider 520 vorgesehen sein, der dazu eingerichtet ist, Wasser aus der komprimierten Luft der Quelle 500 abzuscheiden. Der vierte Wasserabscheider 520 ist ferner über einen Auslass 521 mit dem Einlass 134 des Wasserauslasses 130 der Kälteerzeugungseinrichtung 100 verbunden. Somit kann zu den anderen erwähnten Wasserquellen auch die komprimierte Luft vor ihrer Zuführung in die Kälteerzeugungseinrichtung 100 entfeuchtet werden.

Der vierte Wasserabscheider 520 ist in Figur 1 so dargestellt, dass er auch teilweise in den Stauluftkanal ragt. Dies soll verdeutlichen, dass der dritte Wasserabscheider 520 optional oder alternativ Feuchtigkeit aus der Kühlluft in dem Stauluftkanal 200 abscheiden kann. Hierfür ist der vierte Wasserabscheider 520 (stromaufwärts) möglichst kurz vor dem Auslass 220 des Stauluftkanals 200 angeordnet. Somit kann über die Düse 310 in die Kühlluft des Stauluftkanals 200 eingesprühtes Wasser rückgewonnen werden, beispielsweise bei hohen Umgebungslufttemperaturen und niedriger Luftfeuchtigkeit der Umgebungsluft.

Um das durch einen der Wasserabscheider 120, 440, 510, 520 gewonnene Wasser effizient zu der Düse 310 zu befördern, kann der erste Wasserabscheider 120 und/oder der Wasserauslass 130 der Kälteerzeugungseinrichtung 100 dazu eingerichtet sein, dass in die erste wasserführende Leitung 320 eingeleitete Wasser unter Druck zu setzen. Hierzu kann die Kälteerzeugungseinrichtung 100 den ersten Wasserabscheider mit Druckluft beaufschlagen, sodass der Druck auf das in die erste wasserführende Leitung 320 eingeleitete Wasser durch das in dem ersten Wasserabscheider abgeschiedene Wasser aufgebracht wird. Mit anderen Worten wird das in dem ersten Wasserabscheider 120 befindliche Wasser und/oder das in dem Wasserauslass 130 befindliche Wasser mittels Druckluft in Richtung erste wasserführende Leitung 320 und Düse 310 gefördert.

Alternativ oder zusätzlich kann der erste Wasserabscheider 120 und/oder der Wasserauslass 130 eine Fördereinrichtung 140 umfassen, die dazu eingerichtet ist, das in dem ersten Wasserabscheider 120 abgeschiedene Wasser durch die erste wasserführende Leitung 320 zur Düse 310 zu fördern. Die Fördereinrichtung 140 kann eine Kolbenpumpe oder Kreiselpumpe sein. Die optionale Fördereinrichtung 140 kann insbesondere dann eingesetzt werden, wenn nicht für alle Betriebsphasen gewährleistet ist, dass der anderweitig erzeugte Druck auf das Wasser in dem ersten Wasserabscheider 120 und/oder Wasserauslass 130 ausreicht, um das Wasser zur Düse 310 zu fördern.

Die voranstehend erörterten Varianten, Ausgestaltungen und Ausführungsbeispiele dienen lediglich zur Beschreibung der beanspruchten Lehre, schränken diese jedoch nicht auf die Varianten, Ausgestaltungen und Ausführungsbeispiele ein.

## Patentansprüche

1. Flugzeugkühlsystem (10) mit:
- einem Stauluftkanal (200);
- einer in dem Stauluftkanal (200) angeordneten Düse (310), die an eine erste wasserführende Leitung (320) angeschlossen ist, und
- einer Kälteerzeugungseinrichtung (100), umfassend:
-- einen thermisch mit der Kälteerzeugungseinrichtung (100) gekoppelten Wärmetauscher (110), der dazu eingerichtet ist, von der Kälteerzeugungseinrichtung (100) erzeugte Abwärme an in dem Stauluftkanal (200) vorhandene Kühlluft abzugeben,
-- einen ersten Wasserabscheider (120), der dazu eingerichtet ist, Wasser aus der von der Kälteerzeugungseinrichtung (100) gekühlten Luft abzuscheiden, und
-- einen Wasserauslass (130), der dazu eingerichtet ist, in dem ersten Wasserabscheider (120) gewonnenes Wasser in die erste wasserführende Leitung (320) einzuleiten,
**dadurch gekennzeichnet, dass** der Wasserauslass (130) einen Einlass (134) aufweist, der dazu eingerichtet ist, an eine zweite wasserführende Leitung (330) angeschlossen zu werden,
wobei der Wasserauslass (130) ferner dazu eingerichtet ist, einen Unterdruck an dem Einlass (134) zu erzeugen.

2. Flugzeugkühlsystem nach Anspruch 1,
**dadurch gekennzeichnet, dass** der Wasserauslass (130) eine Venturi-Düse bildet, wobei der durch die Venturi-Düse gebildete Unterdruck über den Einlass (134) auf die zweite wasserführende Leitung (330) aufgebracht wird.

3. Flugzeugkühlsystem nach Anspruch 1 oder 2, ferner umfassend:
- eine Mischkammer (400), die dazu eingerichtet ist, zwei oder mehr Luftströme zu vermischen und einen Mischluftstrom abzugeben, wobei die Mischkammer (400) umfasst:
-- einen zweiten Wasserabscheider (440), der dazu eingerichtet ist, in der Mischkammer (400) anfallendes Kondenswasser abzuscheiden,
wobei der zweite Wasserabscheider (440) über die zweite wasserführende Leitung (330) mit dem Einlass (134) des Wasserauslasses (130) der Kälteerzeugungseinrichtung (100) verbunden ist.

4. Flugzeugkühlsystem nach einem der Ansprüche 1 bis 3, wobei der erste Wasserabscheider (120) und/oder der Wasserauslass (130) der Kälteerzeugungseinrichtung (100) dazu eingerichtet ist, das in die erste wasserführende Leitung (320) eingeleitete Wasser unter Druck zu setzen.

5. Flugzeugkühlsystem nach Anspruch 4, wobei die Kälteerzeugungseinrichtung (100) dazu eingerichtet ist, den ersten Wasserabscheider (120) mit Druckluft zu beaufschlagen, sodass der Druck auf das in die erste wasserführende Leitung (320) eingeleitete Wasser durch das in dem ersten Wasserabscheider (120) abgeschiedene Wasser aufgebracht wird.

6. Flugzeugkühlsystem nach Anspruch 4 oder 5, wobei der erste Wasserabscheider (120) und/oder der Wasserauslass (130) der Kälteerzeugungseinrichtung (100) eine Fördereinrichtung (140) umfasst, die dazu eingerichtet ist, das in dem ersten Wasserabscheider (120) abgeschiedene Wasser durch die erste wasserführende Leitung (320) zu fördern.

7. Flugzeugkühlsystem nach einem der Ansprüche 1 bis 6, ferner umfassend:
- eine Quelle (500) komprimierter Luft, die dazu eingerichtet ist, der Kälteerzeugungseinrichtung (100) komprimierte Luft zuzuführen,
wobei die Kälteerzeugungseinrichtung (100) dazu eingerichtet ist, die komprimierte Luft zu entspannen und in dem Wärmetauscher (110) zu kühlen.

8. Flugzeugkühlsystem nach Anspruch 7, ferner umfassend:
- einen dritten Wasserabscheider (510), der dazu eingerichtet ist, Wasser an einer Einlassöffnung (502) für einen Zuluftstrom (501), der der Quelle (500) zum Erzeugen der komprimierten Luft zugeführt wird, abzuscheiden, wobei der dritte Wasserabscheider (510) über einen Auslass (511) mit dem Einlass (134) des Wasserauslasses (130) der Kälteerzeugungseinrichtung (100) verbunden ist.

9. Flugzeugkühlsystem nach Anspruch 7 oder 8, ferner umfassend:
- einen vierten Wasserabscheider (520), der dazu eingerichtet ist, Wasser aus der komprimierten Luft der Quelle (500) abzuscheiden, wobei der vierte Wasserabscheider (510) über einen Auslass (521) mit dem Einlass (134) des Wasserauslasses (130) der Kälteerzeugungseinrichtung (100) verbunden ist.

10. Flugzeugkühlsystem nach einem der Ansprüche 1 bis 9, wobei der Stauluftkanal (200) einen Lufteinlass (210) und einen Luftauslass (220) umfasst, sodass Umgebungsluft durch den Stauluftkanal (200) von dem Lufteinlass (210) zu dem Luftauslass (220) strömen kann, wobei der Wärmetauscher (110) stromabwärts der Düse (310) angeordnet ist, und/oder
wobei der Stauluftkanal (200) eine Luftfördereinrichtung (230) aufweist, um Umgebungsluft durch den Stauluftkanal (200) zu leiten.

11. Flugzeugkühlsystem nach Anspruch 3 oder einem der Ansprüche 4 bis 10, wenn diese von Anspruch 3 abhängen, wobei die Mischkammer (400) ferner umfasst:
-- einen ersten Einlass (410), der dazu eingerichtet ist, einen von der Kälteerzeugungseinrichtung (100) erzeugten Frischluftstrom in die Mischkammer (400) einzuleiten,
-- einen zweiten Einlass (420), der dazu eingerichtet ist, einen von einem Flugzeugabschnitt (20) entnommenen Rezirkulationsluftstrom in die Mischkammer (400) einzuleiten, und
-- einen Auslass (430), der dazu eingerichtet ist, die in die Mischkammer (400) eingeleiteten und dort vermischten Luftströme dem Flugzeugabschnitt (20) zuzuführen.

12. Flugzeug (11), das ein Flugzeugkühlsystem (10) nach einem der Ansprüche 1 bis 11 umfasst.

## Claims

1. Aircraft cooling system (10) with:
- a ram air duct (200);
- a nozzle (310) disposed in the ram air duct (200) and connected to a first water-carrying conduit (320); and
- a refrigeration device (100) comprising:
-- a heat exchanger (110) thermally coupled to the cold generating device (100) and adapted to release waste heat generated by the cold generating device (100) to cooling air present in the ram air duct (200),
-- a first water separator (120) adapted to separate water from the air cooled by the refrigeration equipment (100), and
-- a water outlet (130) designed to discharge water obtained in the first water separator (120) into the first water-carrying pipe (320),
**characterised in that** the water outlet (130) has an inlet (134) adapted to be connected to a second water-carrying line (330),
the water outlet (130) being further adapted to create a negative pressure at the inlet (134).

2. Aircraft cooling system according to claim 1,
**characterised in that** the water outlet (130) forms a venturi nozzle, the negative pressure formed by the venturi nozzle being applied via the inlet (134) to the second water-carrying line (330).

3. The aircraft cooling system according to claim 1 or 2,
further comprising:
- a mixing chamber (400) adapted to mix two or more air streams and discharge a mixed air stream, wherein the mixing chamber (400) comprises
-- a second water separator (440) adapted to separate condensation water generated in the mixing chamber (400),
the second water separator (440) being connected via the second water-carrying line (330) to the inlet (134) of the water outlet (130) of the refrigeration device (100).

4. Aircraft cooling system according to one of claims 1 to 3,
wherein the first water separator (120) and/or the water outlet (130) of the cold generating device (100) is arranged to pressurise the water introduced into the first water-carrying line (320).

5. Aircraft cooling system according to claim 4,
wherein the cold generating device (100) is adapted to pressurize the first water separator (120) with compressed air so that the pressure on the water introduced into the first water-carrying line (320) is applied by the water separated in the first water separator (120).

6. An aircraft cooling system according to claim 4 or 5,
wherein the first water separator (120) and/or the water outlet (130) of the cold generating device (100) comprises a conveying device (140) arranged to convey the water separated in the first water separator (120) through the first water-carrying line (320).

7. Aircraft cooling system according to any of claims 1 to 6,
further comprising
- a source (500) of compressed air adapted to supply compressed air to the refrigeration equipment (100),
wherein the cold generating means (100) is adapted to expand the compressed air and cool it in the heat exchanger (110).

8. The aircraft cooling system according to claim 7,
further comprising:
- a third water separator (510) adapted to separate water at an inlet opening (502) for a supply air flow (501) supplied to the source (500) for generating the compressed air, the third water separator (510) being connected via an outlet (511) to the inlet (134) of the water outlet (130) of the cold generating device (100).

9. Aircraft cooling system according to claim 7 or 8,
further comprising:
- a fourth water separator (520) adapted to separate water from the compressed air of the source (500), the fourth water separator (510) being connected via an outlet (521) to the inlet (134) of the water outlet (130) of the refrigeration equipment (100).

10. An aircraft cooling system according to any one of claims 1 to 9, the ram air duct (200) comprising an air inlet (210) and an air outlet (220) such that ambient air can flow through the ram air duct (200) from the air inlet (210) to the air outlet (220), wherein the heat exchanger (110) is located downstream of the nozzle (310), and/or
wherein the ram air duct (200) comprises air conveying means (230) for passing ambient air through the ram air duct (200).

11. An aircraft cooling system according to claim 3 or any of claims 4 to 10 when dependent on claim 3, wherein the mixing chamber (400) further comprises
-- a first inlet (410) adapted to introduce a flow of fresh air generated by the cold generating means (100) into the mixing chamber (400),
-- a second inlet (420) adapted to introduce a recirculation airflow taken from an aircraft section (20) into the mixing chamber (400); and
-- an outlet (430) designed to direct the air streams introduced into the mixing chamber (400) and mixed there to the aircraft section (20).

12. An aircraft (11) comprising an aircraft cooling system (10) according to any one of claims 1 to 11

## Revendications

1. Système de refroidissement de l'avion (10) avec :
- un conduit d'air de bélier (200) ;
- une buse (310) disposée dans le conduit d'air dynamique (200) et reliée à un premier conduit d'eau (320) ; et
- un dispositif de réfrigération (100) comprenant :
-- un échangeur de chaleur (110) couplé thermiquement au dispositif de génération de froid (100) et adapté pour libérer la chaleur perdue générée par le dispositif de génération de froid (100) vers l'air de refroidissement présent dans le conduit d'air dynamique (200),
-- un premier séparateur d'eau (120) adapté pour séparer l'eau de l'air refroidi par l'équipement de réfrigération (100), et
-- une sortie d'eau (130) agencée pour évacuer l'eau obtenue dans le premier séparateur d'eau (120) dans le premier tuyau de transport d'eau (320),
**caractérisé en ce que** la sortie d'eau (130) possède une entrée (134) adaptée pour être reliée à une deuxième ligne de transport d'eau (330),
dans laquelle la sortie d'eau (130) est en outre adaptée pour créer une pression négative à l'entrée (134).

2. Le système de refroidissement de l'avion selon la revendication 1,
**caractérisé en ce que** la sortie d'eau (130) forme une buse venturi, la pression négative formée par la buse venturi étant appliquée par l'entrée (134) à la deuxième conduite de transport d'eau (330).

3. Le système de refroidissement de l'aéronef selon la revendication 1 ou 2, comprenant en outre
- une chambre de mélange (400) adaptée pour mélanger deux ou plusieurs flux d'air et pour décharger un flux d'air mélangé, dans laquelle la chambre de mélange (400) comprend
-- un deuxième séparateur d'eau (440) adapté pour séparer l'eau de condensation générée dans la chambre de mélange (400),
dans lequel le deuxième séparateur d'eau (440) est relié à l'entrée (134) de la sortie d'eau (130) du dispositif de génération de froid (100) par la deuxième conduite d'eau (330).

4. Le système de refroidissement d'avion selon l'une des revendications 1 à 3,
dans lequel le premier séparateur d'eau (120) et/ou la sortie d'eau (130) du dispositif de génération de froid (100) est agencé pour mettre sous pression l'eau introduite dans la première conduite d'eau (320).

5. Le système de refroidissement d'avion selon la revendication 4,
dans lequel le dispositif de génération de froid (100) est adapté pour pressuriser le premier séparateur d'eau (120) avec de l'air comprimé de sorte que la pression sur l'eau introduite dans la première conduite de transport d'eau (320) est appliquée par l'eau séparée dans le premier séparateur d'eau (120).

6. Le système de refroidissement d'avion selon la revendication 4 ou 5,
dans lequel le premier séparateur d'eau (120) et/ou la sortie d'eau (130) du dispositif de génération de froid (100) comprend un dispositif de transport (140) agencé pour transporter l'eau séparée dans le premier séparateur d'eau (120) à travers la première ligne de transport d'eau (320).

7. Le système de refroidissement de l'aéronef selon l'une des revendications 1 à 6, comprenant en outre
- une source (500) d'air comprimé adaptée pour alimenter en air comprimé les moyens de réfrigération (100),
dans lequel le moyen de production de froid (100) est adapté pour détendre l'air comprimé et le refroidir dans l'échangeur de chaleur (110).

8. Le système de refroidissement de l'aéronef de la revendication 7,
comprenant en outre
- un troisième séparateur d'eau (510) adapté pour séparer l'eau au niveau d'une ouverture d'entrée (502) pour un flux d'air d'alimentation (501) fourni à la source (500) pour la génération de l'air comprimé, le troisième séparateur d'eau (510) étant connecté via une sortie (511) à l'entrée (134) de la sortie d'eau (130) du dispositif de génération de froid (100).

9. Le système de refroidissement d'aéronef selon la revendication 7 ou 8, comprenant en outre
- un quatrième séparateur d'eau (520) adapté pour séparer l'eau de l'air comprimé de la source (500), le quatrième séparateur d'eau (510) étant relié par une sortie (521) à l'entrée (134) de la sortie d'eau (130) du dispositif de génération de froid (100).

10. Le système de refroidissement d'avion selon l'une quelconque des revendications 1 à 9,
dans lequel le conduit d'air dynamique (200) comprend une entrée d'air (210) et une sortie d'air (220) de telle sorte que l'air ambiant peut s'écouler à travers le conduit d'air dynamique (200) de l'entrée d'air (210) à la sortie d'air (220), dans lequel l'échangeur de chaleur (110) est situé en aval de la buse (310), et/ou dans lequel le conduit d'air dynamique (200) comprend un moyen de transport d'air (230) pour faire passer l'air ambiant par le conduit d'air dynamique (200).

11. Le système de refroidissement d'avion selon la revendication 3 ou l'une des revendications 4 à 10 lorsqu'il dépend de la revendication 3,
dans lequel la chambre de mélange (400) comprend en outre
-- une première entrée (410) adaptée pour introduire un flux d'air frais généré par le moyen de génération de froid (100) dans la chambre de mélange (400),
-- une seconde entrée (420) adaptée pour introduire un flux d'air de recirculation prélevé dans une section de l'avion (20) dans la chambre de mélange (400)
-- une sortie (430) disposée pour diriger les flux d'air introduits dans la chambre de mélange (400) et mélangés à cet endroit vers la section de l'avion (20).

12. Un aéronef (11) comprenant un système de refroidissement d'aéronef (10) selon l'une quelconque des revendications 1 à 11.
